# EUROPÄISCHE PATENTSCHRIFT

(11) **EP 2 984 527 B1**
(45) Veröffentlichungstag und Bekanntmachung des Hinweises auf die Patenterteilung: **02.08.2017**
(21) Anmeldenummer: 14707719.2
(22) Anmeldetag: 26.02.2014
(51) Int. Cl.: G05B 7/02, G05B 11/42

(54) **HYDRAULIKANORDNUNG MIT ENTKOPPELTEM BETRIEB ZWEIER VENTILEINRICHTUNGEN**
HYDRAULIC ASSEMBLY WITH DECOUPLED OPERATION OF TWO VALVE DEVICES
AGENCEMENT HYDRAULIQUE AVEC FONCTIONNEMENT DÉCOUPLÉ DE DEUX DISPOSITIFS DE VANNE

(30) Priorität: 11.04.2013 EP 13163385
(43) Veröffentlichungstag der Anmeldung: 17.02.2016
(73) Patentinhaber: Primetals Technologies Germany GmbH, 91052 Erlangen (DE)
(72) Erfinder: FELKL, Hans-Joachim, 91301 Forchheim (DE)
(74) Vertreter: Metals@Linz
(86) Internationale Anmeldenummer: PCT/EP2014/053724
(87) Internationale Veröffentlichungsnummer: WO 2014/166668

(56) Entgegenhaltungen:
- DE-A1- 3 500 482
- US-A- 4 236 202
- US-A1- 2010 042 261

## Beschreibung

Die vorliegende Erfindung betrifft ein Betriebsverfahren für eine Hydraulikanordnung,
- wobei die Hydraulikanordnung einen Hydraulikaktuator umfasst, der über eine Hauptventileinrichtung und eine Zusatzventileinrichtung ansteuerbar ist,
- wobei der Hauptventileinrichtung ein Hauptregler vorgeordnet ist, der einen P-Block und einen I-Block umfasst,
- wobei die Hydraulikanordnung alternativ in einem Normalbetrieb oder in einem Sonderbetrieb betrieben wird,
- wobei im Normalbetrieb
   -- die Zusatzventileinrichtung deaktiviert wird,
   -- dem Hauptregler eine Hauptsollgröße und eine korrespondierende Hauptistgröße des Hydraulikaktuators zugeführt werden und
   -- der Hauptregler anhand der Hauptsollgröße und der Hauptistgröße eine Hauptstellgröße für die Hauptventileinrichtung ermittelt und die Hauptstellgröße der Hauptventileinrichtung vorgibt.

Die vorliegende Erfindung betrifft weiterhin eine Hydraulikanordnung,
- wobei die Hydraulikanordnung einen Hydraulikaktuator umfasst, der über eine Hauptventileinrichtung und eine Zusatzventileinrichtung ansteuerbar ist,
- wobei die Hydraulikanordnung eine Steuereinrichtung aufweist,
- wobei die Steuereinrichtung einen der Hauptventileinrichtung vorgeordneten Hauptregler implementiert, der einen P-Block und einen I-Block umfasst,
- wobei die Steuereinrichtung die Hydraulikanordnung alternativ in einem Normalbetrieb oder in einem Sonderbetrieb betreibt,
- wobei die Steuereinrichtung derart ausgebildet ist, dass im Normalbetrieb
   -- die Zusatzventileinrichtung deaktiviert wird,
   -- dem Hauptregler eine Hauptsollgröße und eine korrespondierende Hauptistgröße des Hydraulikaktuators zugeführt werden und
   -- der Hauptregler anhand der Hauptsollgröße und der Hauptistgröße eine Hauptstellgröße für die Hauptventileinrichtung ermittelt und die Hauptstellgröße der Hauptventileinrichtung vorgibt.

Derartige Betriebsverfahren und derartige Hydraulikanordnungen (wie z.B. US 2010/0042261 A1) sind allgemein bekannt.

Bei Hydraulikanordnungen wird üblicherweise der Hydraulikaktuator (beispielsweise eine Hydraulikzylindereinheit oder ein Hydromotor) über eine Ventileinrichtung verstellt. Mittels der Ventileinrichtung ist es möglich, dass der Hydraulikaktuator geregelt betrieben werden kann. Insbesondere bei einer Hydraulikzylindereinheit wird üblicherweise die Position des Kolbens, die vom Kolben ausgeübte Kraft oder eine Verfahrgeschwindigkeit des Kolbens geregelt. Bei einem Hydromotor werden die korrespondierenden rotatorischen Größen geregelt. Als Ventileinrichtungen kommen Servoventile, Proportionalventile oder Schaltventile zum Einsatz.

In vielen Fällen ist es ausreichend, dass zum Betätigen des Hydraulikaktuators eine einzige Ventileinrichtung vorhanden ist. In manchen Fällen ist es jedoch erforderlich, dass (mindestens) zwei Ventileinrichtungen parallel auf den Hydraulikaktuator wirken können. Wenn zu einem bestimmten Zeitpunkt nur eine der beiden Ventileinrichtungen angesteuert wird oder die beiden Ventileinrichtungen gleichartig angesteuert werden, ist dies problemlos. Wenn hingegen zu einem bestimmten Zeitpunkt die beiden Ventileinrichtungen unabhängig voneinander mit einer jeweiligen Stellgröße beaufschlagt werden, dürfen sich die dadurch bewirkten Funktionen nicht gegenseitig stören.

Die Aufgabe der vorliegenden Erfindung besteht darin, Möglichkeiten zu schaffen, mittels derer eine derartige, nicht miteinander koordinierte Ansteuerung der Ventileinrichtungen möglich ist.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 8.

Erfindungsgemäß wird vorgeschlagen, dass der Zusatzventileinrichtung ein Zusatzregler vorgeordnet ist, der einen Basisblock und einen I-Block umfasst und dass im Sonderbetrieb
- dem Basisblock des Zusatzreglers eine Zusatzsollgröße und eine korrespondierende Zusatzistgröße des Hydraulikaktuators zugeführt werden,
- der Basisblock des Zusatzreglers anhand der Zusatzsollgröße und der Zusatzistgröße eine Zusatzstellgröße für die Zusatzventileinrichtung ermittelt und die Zusatzstellgröße der Zusatzventileinrichtung vorgibt,
- dem I-Block des Zusatzreglers die Hauptsollgröße und die Hauptistgröße zugeführt werden,
- der I-Block des Zusatzreglers anhand der Hauptsollgröße und der Hauptistgröße einen Integralanteil ermittelt,
- der Integralanteil auf die Zusatzstellgröße aufgeschaltet wird,
- dem P-Block des Hauptreglers die Hauptsollgröße und die Hauptistgröße zugeführt werden und
- der P-Block des Hauptreglers anhand der Hauptsollgröße und der Hauptistgröße die Hauptstellgröße ermittelt und der Hauptventileinrichtung vorgibt.

In einer bevorzugten Ausgestaltung des Betriebsverfahrens wird im Normalbetrieb geprüft, ob die Hauptsollgröße konstant ist oder variiert. In dem Fall, dass die Hauptsollgröße konstant ist, wird der I-Block des Hauptreglers aktiviert. In dem Fall, dass die Hauptsollgröße variiert, wird der I-Block des Hauptreglers deaktiviert. Beispielsweise können dem I-Block des Hauptreglers je nachdem, ob er aktiviert ist oder nicht, die Hauptsollgröße und die Hauptistgröße zugeführt oder nicht zugeführt werden.

Es ist möglich, dass der Zusatzventileinrichtung ein binär schaltendes Sperrventil vor- oder nachgeordnet ist. In diesem Fall korrespondiert vorzugsweise ein Öffnen des Sperrventils mit einem Übergang vom Normalbetrieb in den Sonderbetrieb und ein Schließen des Sperrventils mit einem Übergang vom Sonderbetrieb in den Normalbetrieb.

In einer besonders bevorzugten Ausgestaltung des Betriebsverfahrens ist vorgesehen,
- dass der I-Block des Hauptreglers als I-Block des Zusatzreglers verwendet wird,
- dass beim Wechsel vom Normalbetrieb in den Sonderbetrieb
   -- das zuletzt ermittelte Ausgangssignal des I-Blocks des Hauptreglers als Anfangssignal für den Normalbetrieb in einem Pufferspeicher zwischengespeichert wird und
   -- ein im Pufferspeicher gespeichertes Anfangssignal für den Sonderbetrieb aus dem Pufferspeicher ausgelesen und in den I-Block des Hauptreglers geladen wird und
- dass beim Wechsel vom Sonderbetrieb in den Normalbetrieb
   -- das zuletzt ermittelte Ausgangssignal des I-Blocks des Hauptreglers als Anfangssignal für den Sonderbetrieb in dem Pufferspeicher zwischengespeichert wird und
   -- das im Pufferspeicher gespeicherte Anfangssignal für den Normalbetrieb aus dem Pufferspeicher ausgelesen und in den I-Block des Hauptreglers geladen wird.

Die Hauptventileinrichtung weist in einem vollständig geöffneten Zustand einen Hauptnennfluss auf. Ebenso weist die Zusatzventileinrichtung in einem vollständig geöffneten Zustand einen Zusatznennfluss auf. Vorzugsweise ist der Zusatznennfluss erheblich größer als der Hauptnennfluss, beispielsweise mindestens zehnmal so groß.

Die Hauptsollgröße und die korrespondierende Hauptistgröße können nach Bedarf bestimmt sein. In der Regel sind die Hauptsollgröße und die korrespondierende Hauptistgröße Positionen oder Kräfte.

In analoger Weise können auch die Zusatzsollgröße und die korrespondierende Zusatzistgröße nach Bedarf bestimmt sein. Beispielsweise können die Zusatzsollgröße und die korrespondierende Zusatzistgröße Beschleunigungen sein.

Der Hydraulikaktuator ist in der Regel als Hydraulikzylindereinheit ausgebildet.

Die Aufgabe wird weiterhin durch eine Hydraulikanordnung mit den Merkmalen des Anspruchs 10 gelöst. Vorteilhafte Ausgestaltungen der erfindungsgemäßen Hydraulikanordnung sind Gegenstand der abhängigen Ansprüche 10 bis 16.

Inhaltlich entsprechen die erfindungsgemäße Hydraulikanordnung und deren Ausgestaltungen einer vorrichtungstechnischen Realisierung des obenstehend erläuterten Betriebsverfahrens und dessen Ausgestaltungen. Zur Vermeidung von Wiederholungen wird daher auf die obenstehenden Erläuterungen verwiesen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

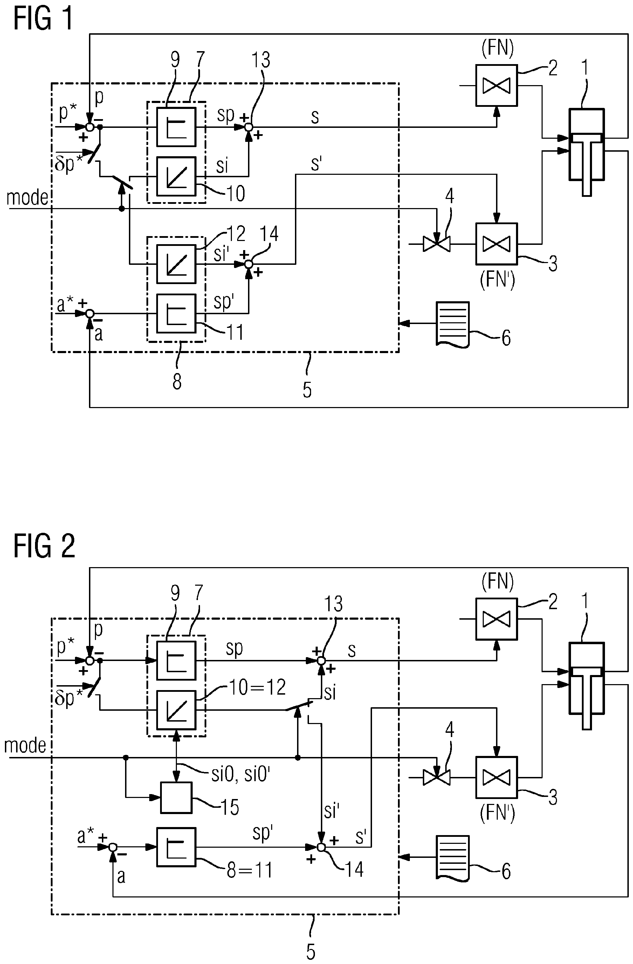

- FIG 1 und 2: je eine Hydraulikanordnung.

Gemäß FIG 1 umfasst eine Hydraulikanordnung einen Hydraulikaktuator 1. Der Hydraulikaktuator 1 kann als Hydromotor ausgebildet sein. Gemäß FIG 1 ist der Hydraulikaktuator 1 als Hydraulikzylindereinheit ausgebildet. Der Hydraulikaktuator 1 ist über zwei Ventileinrichtungen 2, 3 ansteuerbar, nachfolgend als Hauptventileinrichtung 2 und als Zusatzventileinrichtung 3 bezeichnet. Die Ergänzung der Ventileinrichtungen 2, 3 mit dem Zusatz "Haupt-" und "Zusatz-" dient - ebenso wie bei anderen Elementen und Größen, denen diese Ergänzungen beigefügt werden - nur der sprachlichen Unterscheidung. Eine weitergehende Bedeutung kommt den Ergänzungen "Haupt-" und "Zusatz-" nicht zu.

Die Hauptventileinrichtung 2 kann als übliches Servoventil oder Proportionalventil ausgebildet sein. Derartige Ventile sind geregelt verstellbar. Alternativ kann die Hauptventileinrichtung 2 zwei oder vier Schaltventile umfassen, die nur binär geschaltet werden können. In diesem Fall können die Schaltventile beispielsweise pulsweitenmoduliert oder pulscodemoduliert gesteuert werden, so dass die Hauptventileinrichtung 2 auch in diesem Fall geregelt verstellbar ist.

Die Zusatzventileinrichtung 3 kann ebenso ausgebildet sein wie die Hauptventileinrichtung 2. Vorzugsweise ist der Zusatzventileinrichtung 3 in Bezug auf ein nicht dargestelltes Hydrauliksystem ein Sperrventil 4 vor- oder nachgeordnet. Das Sperrventil 4 ist vorzugsweise als Schaltventil ausgebildet, dass - niederfrequent - binär geschaltet wird, also entweder den Zustand vollständig geöffnet oder den Zustand vollständig geschlossen aufweist.

Die Hydraulikanordnung weist weiterhin eine Steuereinrichtung 5 auf. Die Steuereinrichtung 5 ist in der Regel als softwareprogrammierbare Steuereinrichtung ausgebildet, die ein Computerprogramm 6 abgearbeitet. Die Steuereinrichtung 5 implementiert für die Hauptventileinrichtung 2 und die Zusatzventileinrichtung 3 jeweils einen Regler 7, 8, welcher der jeweiligen Ventileinrichtung 2, 3 in steuerungstechnischer Hinsicht vorgeordnet ist. Die beiden Regler 7, 8 werden nachfolgend als Hauptregler 7 und als Zusatzregler 8 bezeichnet.

Der Hauptregler 7 ist als PI-Regler (oder höherwertig) ausgebildet. Der Hauptregler 7 umfasst zumindest einen P-Block 9 und einen I-Block 10. Der P-Block 9 weist ein reines Proportionalverhalten auf, der I-Block 10 ein reines Integralverhalten. Der I-Block 10 dient dazu, einen in der Praxis nicht vermeidbaren Leckstrom der Hydraulikflüssigkeit zu erfassen und den Arbeitspunkt der Hauptventileinrichtung 2 derart einzustellen, dass der Leckstrom im stabilen Zustand kompensiert wird. Der I-Block 10 weist zu diesem Zweck eine Nachstellzeit auf. Die Nachstellzeit ist in der Regel relativ groß, so das der Hauptregler 7 einer Veränderung des Arbeitspunkts relativ langsam folgt. Der Zusatzregler 8 umfasst einen Basisblock 11 und einen I-Block 12. Der Basisblock 11 kann eine prinzipiell beliebige Reglercharakteristik realisieren. Im einfachsten Fall weist der Basisblock 11 ein reines Proportionalverhalten auf, so dass der Basisblock 11 ein P-Block ist. Der I-Block 12 weist - analog zum I-Block 10 des Hauptreglers 7 - ein reines Integralverhalten auf.

Die Steuereinrichtung 5 betreibt die Hydraulikanordnung alternativ in einem Normalbetrieb oder in einem Sonderbetrieb. Nachfolgend wird zunächst der Normalbetrieb erläutert, danach der Sonderbetrieb.

Im Normalbetrieb sind ausschließlich der Hauptregler 7 und die Hauptventileinrichtung 2 aktiv. Die Zusatzventileinrichtung 3 und der Zusatzregler 8 sind hingegen deaktiviert. Im Normalbetrieb wirkt die Zusatzventileinrichtung 3 nicht auf den Hydraulikaktuator 1. Im Normalbetrieb werden dem Hauptregler 7 eine Hauptsollgröße p* und eine korrespondierende Hauptistgröße p des Hydraulikaktuators 1 zugeführt. Der Hauptregler 7 ermittelt anhand der Hauptsollgröße p* und der Hauptistgröße p eine Hauptstellgröße s für die Hauptventileinrichtung 2. Insbesondere ermittelt der P-Block 9 des Hauptreglers 7 einen Proportionalanteil sp und ermittelt der I-Block 10 des Hauptreglers 9 einen Integralanteil si. Der Proportionalanteil sp und der Integralanteil si werden in einem Knotenpunkt 13 zur Hauptstellgröße s addiert. Der Hauptregler 7 gibt die Hauptstellgröße s der Hauptventileinrichtung 2 vor.

Die Hauptsollgröße p* und die Hauptistgröße p können beispielsweise Positionen oder Kräfte sein. Mittels des Hauptreglers 7 und der Hauptventileinrichtung 2 kann beispielsweise innerhalb eines Walzwerkes ein Schlingenheber an ein Metallband angestellt werden oder ein Walzgerüst des Walzwerkes kraft- oder dickengeregelt betrieben werden.

Im Sonderbetrieb - siehe FIG 2 - sind der Zusatzregler 8 und die Zusatzventileinrichtung 3 aktiviert. Der P-Block 9 des Hauptreglers 7 und auch die Hauptventileinrichtung 2 sind nicht deaktiviert, werden jedoch anders betrieben als im Normalbetrieb. Der I-Block 10 des Hauptreglers 7 ist hingegen deaktiviert.

Im Sonderbetrieb werden dem Basisblock 11 des Zusatzreglers 8 eine Zusatzsollgröße a* und eine korrespondierende Zusatzistgröße a des Hydraulikaktuators 1 zugeführt. Der Basisblock 11 des Zusatzreglers 8 ermittelt anhand der Zusatzsollgröße a* und der Zusatzistgröße a eine Zusatzstellgröße s' für die Zusatzventileinrichtung 3 und gibt die Zusatzstellgröße s' der Zusatzventileinrichtung 3 vor. Insbesondere in dem Fall, dass der Basisblock 11 ein Proportionalverhalten aufweist, ermittelt der Basisblock 11 somit einen Proportionalanteil sp'.

Dem I-Block 12 des Zusatzreglers 8 werden hingegen nicht die Zusatzsollgröße a* und die Zusatzistgröße a zugeführt, sondern die Hauptsollgröße p* und die Hauptistgröße p. Der I-Block 12 des Zusatzreglers 8 ermittelt anhand dieser Größen p*, p einen Integralanteil si'. Der Proportionalanteil sp' (bzw. allgemeiner der Basisanteil sp') und der Integralanteil si' werden in einem Knotenpunkt 14 zur Zusatzstellgröße s' addiert. Der Integralanteil si' wird somit auf die vom Basisblock 11 des Zusatzreglers 8 ermittelte Zusatzstellgröße s' aufgeschaltet.

Die Zusatzsollgröße a* und die Zusatzistgröße a können beispielsweise Beschleunigungen sein. Im Sonderbetrieb können mittels der Zusatzventileinrichtung 3 und des Basisblocks 11 des Zusatzreglers 8 beispielsweise unerwünschte Schwingungen gedämpft oder kompensiert werden, die im Betrieb der mittels des Hydraulikaktuators 1 verstellten Einrichtung (beispielsweise eines Walzgerüsts) auftreten. Insbesondere zum Dämpfen und Unterdrücken von unerwünschten Schwingungen (Walzenrattern oder mill chatter) oszilliert die Zusatzistgröße a mit einer relativ hohen Frequenz von in der Regel ca. 100 Hz bis ca. 150 Hz.

Im Sonderbetrieb werden die Hauptsollgröße p* und die Hauptistgröße p nicht dem gesamten Hauptregler 7 zugeführt, sondern nur dem P-Block 9 des Hauptreglers 7. Der P-Block 9 des Hauptreglers 7 ermittelt - ebenso wie im Normalbetrieb - den Proportionalanteil sp. Die Arbeitsweise des P-Blockes 9 als solche ist also gegenüber dem Normalbetrieb unverändert. Im Sonderbetrieb korrespondiert die Hauptstellgröße s jedoch direkt mit dem Proportionalanteil sp. Der P-Block 9 gibt somit die Hauptstellgröße s der Hauptventileinrichtung 2 vor.

In einer besonders bevorzugten Ausgestaltung der vorliegenden Erfindung wird im Normalbetrieb geprüft, ob die Hauptsollgröße p* konstant ist oder variiert. Wenn die Hauptsollgröße p* konstant ist (Änderungswert δp* = 0), wird der I-Block 10 des Hauptreglers 7 aktiviert. Wenn die Hauptsollgröße p* hingegen variiert (Änderungswert δp* = 1), wird der I-Block 10 des Hauptreglers 7 deaktiviert. Beispielsweise können zu diesem Zweck dem I-Block 10 des Hauptreglers 7 je nachdem, ob der I-Block 10 aktiviert ist oder nicht, die Hauptsollgröße p* und die Hauptistgröße p zugeführt oder nicht zugeführt werden. Durch das zeitweise Deaktivieren des I-Blocks 10 des Hauptreglers 7 wird erreicht, dass der Arbeitspunkt der Hauptventileinrichtung 2 nur dann nachgeführt wird, wenn ein konstanter Betriebszustand angenommen werden soll. Dynamische Verstellvorgänge haben daher keinen Einfluss auf den Arbeitspunkt.

Die Umstände, anhand derer entschieden wird, ob der Normalbetrieb oder der Sonderbetrieb vorliegt, können nach Bedarf bestimmt sein. Vorzugsweise sind die Betriebsarten (Normalbetrieb und Sonderbetrieb) und der Zustand des Sperrventils 4 miteinander gekoppelt. Insbesondere korrespondieren vorzugsweise ein Öffnen des Sperrventils 4 mit einem Übergang vom Normalbetrieb in den Sonderbetrieb und ein Schließen des Sperrventils 4 mit einem Übergang vom Sonderbetrieb in den Normalbetrieb. Dies kann beispielsweise dadurch erreicht werden, dass die Änderung der Betriebsart direkt die entsprechende Ansteuerung des Sperrventils 4 bewirkt oder umgekehrt das Ansteuern des Sperrventils 4 das Einstellen der entsprechenden Betriebsart bewirkt.

In einem vollständig geöffneten Zustand weist die Hauptventileinrichtung 2 in einen Hauptnennfluss FN auf. In analoger Weise weist die Zusatzventileinrichtung 3 in einem vollständig geöffneten Zustand einen Zusatznennfluss FN' auf. Die obenstehend erläuterte erfindungsgemäße Vorgehensweise ist insbesondere dann von Vorteil, wenn der Zusatznennfluss FN' erheblich größer als der Hauptnennfluss FN ist, insbesondere mindestens das zehnfache beträgt. Beispielsweise kann der Zusatznennfluss FN' das dreißigfache, das fünfzigfache oder unter Umständen sogar ein noch größeres Vielfaches des Hauptnennflusses FN betragen.

Die Hydraulikanordnung von FIG 2 entspricht im Wesentlichen der von FIG 1. Im Gegensatz zu FIG 1 wird bei FIG 2 jedoch der I-Block 10 des Hauptreglers 7 im Sonderbetrieb als I-Block 12 des Zusatzreglers 8 verwendet. Im Sonderbetrieb ermittelt also der I-Block 10 des Hauptreglers 7 den Integralanteil si'. Der I-Block 10 des Hauptreglers 7 gibt den Integralanteil si' der Zusatzventileinrichtung 3 vor. Die technische Wirkung des I-Blockes 10 - nämlich das Einstellen des Arbeitspunktes - bleibt also erhalten. Der I-Block 10 wirkt jedoch im Sonderbetrieb nicht auf die Hauptventileinrichtung 2, sondern auf die Zusatzventileinrichtung 3. Verzerrungen bei der Ansteuerung der Zusatzventileinrichtung 3, welche ohne entsprechende Kompensation zur Folge hätten, dass im zeitlichen Mittel ein von Null verschiedener Ölstrom in den Hydraulikaktuator 1 oder aus ihm heraus fließt, werden somit weiterhin durch den I-Block 10 des Hauptreglers 7 kompensiert. Die Kompensation wirkt jedoch nicht auf die Hauptventileinrichtung 2, sondern auf die Zusatzventileinrichtung 3.

Das Leckstromverhalten der Hauptventileinrichtung 2 und das Leckstromverhalten der Zusatzventileinrichtung 3 unterscheiden sich in der Regel voneinander. Die mittels des I-Blockes 10 eingestellten Arbeitspunkte im Normalbetrieb und im Sonderbetrieb sind daher im Regelfall nicht die gleichen. Um einen stoßfreien Übergang vom Normalbetrieb in den Sonderbetrieb und umgekehrt zu gewährleisten, ist die Steuereinrichtung 5 bei der Ausgestaltung gemäß FIG 2 daher vorzugsweise derart ausgebildet ist, dass sie beim Wechsel der Betriebsart den bisherigen Arbeitspunkt speichert und den I-Block 10 des Hauptreglers 7 entsprechend initialisiert. Dies wird nachfolgend zunächst für den Übergang vom Normalbetrieb in den Sonderbetrieb und danach umgekehrt für den Übergang vom Sonderbetrieb in den Normalbetrieb erläutert.

Man nehme also an, es soll vom Normalbetrieb in den Sonderbetrieb übergegangen werden. Der I-Block 10 weist zum Zeitpunkt des Wechsels der Betriebsart ein bestimmtes Ausgangssignal auf, das heißt den zuletzt ermittelten Integralanteil si. Dieser Wert wird beim Wechsel vom Normalbetrieb in den Sonderbetrieb als Anfangssignal si0 für den Normalbetrieb in einem Pufferspeicher 15 zwischengespeichert. Weiterhin wird aus dem Pufferspeicher 15 ein Anfangssignal si0' für den Sonderbetrieb ausgelesen und in den I-Block 10 des Hauptreglers 7 geladen.

Wenn umgekehrt vom Sonderbetrieb in den Normalbetrieb übergegangen werden soll, wird die inverse Vorgehensweise ergriffen: Auch in diesem Fall weist der I-Block 10 des Hauptreglers 7 zum Zeitpunkt des Wechsels der Betriebsart ein bestimmtes Ausgangssignal auf, das heißt den zuletzt ermittelten Integralanteil si'. Dieser Wert wird beim Wechsel vom Sonderbetrieb in den Normalbetrieb als Anfangssignal si0' für den Sonderbetrieb in dem Pufferspeicher 15 zwischengespeichert. Weiterhin wird aus dem Pufferspeicher 15 das Anfangssignal si0 für den Normalbetrieb ausgelesen und in den I-Block 10 des Hauptreglers 7 geladen.

Im Ergebnis wird somit bei einem Wechsel der Betriebsart der Integralanteil si, si' der jeweils aufgegebenen Betriebsart eingefroren und der Integralanteil si0, si0' der jeweils neu aufgenommenen Betriebsart reaktiviert.

Die vorliegende Erfindung weist viele Vorteile auf. Insbesondere ist es möglich, in beiden Betriebsarten auf einfache Weise eine Leckstromkompensation zu erreichen, ohne den Arbeitspunkt der Hauptventileinrichtung 2 zu verschieben.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Hydraulikanordnung,
- wobei die Hydraulikanordnung einen Hydraulikaktuator (1) umfasst, der über eine Hauptventileinrichtung (2) und eine Zusatzventileinrichtung (3) ansteuerbar ist,
- wobei der Hauptventileinrichtung (2) ein Hauptregler (7) vorgeordnet ist, der einen P-Block (9) und einen I-Block (10) umfasst,
- wobei der Zusatzventileinrichtung (3) ein Zusatzregler (8) vorgeordnet ist, der einen Basisblock (11) und einen I-Block (12) umfasst,
- wobei die Hydraulikanordnung alternativ in einem Normalbetrieb oder in einem Sonderbetrieb betrieben wird,
- wobei im Normalbetrieb
-- die Zusatzventileinrichtung (3) deaktiviert wird,
-- dem Hauptregler (7) eine Hauptsollgröße (p*) und eine korrespondierende Hauptistgröße (p) des Hydraulikaktuators (1) zugeführt werden und
-- der Hauptregler (7) anhand der Hauptsollgröße (p*) und der Hauptistgröße (p) eine Hauptstellgröße (s) für die Hauptventileinrichtung (2) ermittelt und die Hauptstellgröße (s) der Hauptventileinrichtung (2) vorgibt,
- **dadurch gekennzeichnet, dass** im Sonderbetrieb
-- dem Basisblock (11) des Zusatzreglers (8) eine Zusatzsollgröße (a*) und eine korrespondierende Zusatzistgröße (a) des Hydraulikaktuators (1) zugeführt werden,
-- der Basisblock (11) des Zusatzreglers (8) anhand der Zusatzsollgröße (a*) und der Zusatzistgröße (a) eine Zusatzstellgröße (s') für die Zusatzventileinrichtung (3) ermittelt und die Zusatzstellgröße (s') der Zusatzventileinrichtung (3) vorgibt,
-- dem I-Block (12) des Zusatzreglers (8) die Hauptsollgröße (p*) und die Hauptistgröße (p) zugeführt werden,
-- der I-Block (12) des Zusatzreglers (8) anhand der Hauptsollgröße (p*) und der Hauptistgröße (p) einen Integralanteil (si') ermittelt,
-- der Integralanteil (si') auf die Zusatzstellgröße (s') aufgeschaltet wird,
-- dem P-Block (9) des Hauptreglers (7) die Hauptsollgröße (p*) und die Hauptistgröße (p) zugeführt werden und
-- der P-Block (9) des Hauptreglers (7) anhand der Hauptsollgröße (p*) und der Hauptistgröße (p) die Hauptstellgröße (s) ermittelt und der Hauptventileinrichtung (2) vorgibt.

2. Betriebsverfahren nach Anspruch 1, **dadurch ge**- **kennzeichnet**, dass im Normalbetrieb geprüft wird, ob die Hauptsollgröße (p*) konstant ist oder variiert, dass in dem Fall, dass die Hauptsollgröße (p*) konstant ist, der I-Block (10) des Hauptreglers (7) aktiviert wird und in dem Fall, dass die Hauptsollgröße (p*) variiert, der I-Block (10) des Hauptreglers (7) deaktiviert wird.

3. Betriebsverfahren nach Anspruch 1 oder 2, **dadurch gekennzeichnet, dass** der Zusatzventileinrichtung (3) ein binär schaltendes Sperrventil (4) vor- oder nachgeordnet ist und dass ein Öffnen des Sperrventils (4) mit einem Übergang vom Normalbetrieb in den Sonderbetrieb und ein Schließen des Sperrventils (4) mit einem Übergang vom Sonderbetrieb in den Normalbetrieb korrespondiert.

4. Betriebsverfahren nach Anspruch 1, 2 oder 3, **dadurch gekennzeichnet,**
- **dass** der I-Block (10) des Hauptreglers (7) im Sonderbetrieb als I-Block (12) des Zusatzreglers (8) verwendet wird,
- **dass** beim Wechsel vom Normalbetrieb in den Sonderbetrieb
-- das zuletzt ermittelte Ausgangssignal (si) des I-Blocks (10) des Hauptreglers (7) als Anfangssignal (si0) für den Normalbetrieb in einem Pufferspeicher (15) zwischengespeichert wird und
-- ein im Pufferspeicher (15) gespeichertes Anfangssignal (si0') für den Sonderbetrieb aus dem Pufferspeicher (15) ausgelesen und in den I-Block (10) des Hauptreglers (7) geladen wird und
- **dass** beim Wechsel vom Sonderbetrieb in den Normalbetrieb
-- das zuletzt ermittelte Ausgangssignal (si) des I-Blocks (10) des Hauptreglers (7) als Anfangssignal (si0') für den Sonderbetrieb in dem Pufferspeicher (15) zwischengespeichert wird und
-- das im Pufferspeicher (15) gespeicherte Anfangssignal (si0) für den Normalbetrieb aus dem Pufferspeicher (15) ausgelesen und in den I-Block (10) des Hauptreglers (7) geladen wird.

5. Betriebsverfahren nach einem der obigen Ansprüche, **da**- **durch gekennzeichnet**, dass die Hauptventileinrichtung (2) in einem vollständig geöffneten Zustand einen Hauptnennfluss (FN) aufweist, dass die Zusatzventileinrichtung (3) in einem vollständig geöffneten Zustand einen Zusatznennfluss (FN') aufweist und dass der Zusatznennfluss (FN') erheblich größer als der Hauptnennfluss (FN) ist.

6. Betriebsverfahren nach einem der obigen Ansprüche, **da**- **durch gekennzeichnet**, dass die Hauptsollgröße (p*) und die korrespondierende Hauptistgröße (p) Positionen oder Kräfte sind.

7. Betriebsverfahren nach einem der obigen Ansprüche, d a - **durch gekennzeichnet**, dass die Zusatzsollgröße (a*) und die korrespondierende Zusatzistgröße (a) Beschleunigungen sind.

8. Betriebsverfahren nach einem der obigen Ansprüche, d a - **durch gekennzeichnet** , dass der Hydraulikaktuator (1) als Hydraulikzylindereinheit ausgebildet ist.

9. Hydraulikanordnung,
- wobei die Hydraulikanordnung einen Hydraulikaktuator (1) umfasst, der über eine Hauptventileinrichtung (2) und eine Zusatzventileinrichtung (3) ansteuerbar ist,
- wobei die Hydraulikanordnung eine Steuereinrichtung (5) aufweist,
- wobei die Steuereinrichtung (5) einen der Hauptventileinrichtung (2) vorgeordneten Hauptregler (7) implementiert, der einen P-Block (9) und einen I-Block (10) umfasst,
- wobei die Steuereinrichtung (5) einen der Zusatzventileinrichtung (3) vorgeordneten Zusatzregler (8) implementiert, der einen Basisblock (11) und einen I-Block (12) umfasst,
- wobei die Steuereinrichtung (5) die Hydraulikanordnung alternativ in einem Normalbetrieb oder in einem Sonderbetrieb betreibt,
- wobei die Steuereinrichtung (5) derart ausgebildet ist, dass im Normalbetrieb
-- die Zusatzventileinrichtung (3) deaktiviert wird,
-- dem Hauptregler (7) eine Hauptsollgröße (p*) und eine korrespondierende Hauptistgröße (p) des Hydraulikaktuators (1) zugeführt werden und
-- der Hauptregler (7) anhand der Hauptsollgröße (p*) und der Hauptistgröße (p) eine Hauptstellgröße (s) für die Hauptventileinrichtung (2) ermittelt und die Hauptstellgröße (s) der Hauptventileinrichtung (2) vorgibt,
- dadurch gekennzeichet, dass die Steuereinrichtung weiterhin derart ausgebildet ist, dass im Sonderbetrieb
-- dem Basisblock (11) des Zusatzreglers (8) eine Zusatzsollgröße (a*) und eine korrespondierende Zusatzistgröße (a) des Hydraulikaktuators (1) zugeführt werden,
-- der Basisblock (11) des Zusatzreglers (8) anhand der Zusatzsollgröße (a*) und der Zusatzistgröße (a) eine Zusatzstellgröße (s') für die Zusatzventileinrichtung (3) ermittelt und die Zusatzstellgröße (s') der Zusatzventileinrichtung (3) vorgibt,
-- dem I-Block (12) des Zusatzreglers (8) die Hauptsollgröße (p*) und die Hauptistgröße (p) zugeführt werden,
-- der I-Block (12) des Zusatzreglers (8) anhand der Hauptsollgröße (p*) und der Hauptistgröße (p) einen Integralanteil (si') ermittelt,
-- der Integralanteil (si') auf die Zusatzstellgröße (s') aufgeschaltet wird,
-- dem P-Block (9) des Hauptreglers (7) die Hauptsollgröße (p*) und die Hauptistgröße (p) zugeführt werden und
-- der P-Block (9) des Hauptreglers (7) anhand der Hauptsollgröße (p*) und der Hauptistgröße (p) die Hauptstellgröße (s) ermittelt und der Hauptventileinrichtung (2) vorgibt.

10. Hydraulikanordnung nach Anspruch 9, **dadurch gekennzeichnet , dass** die Steuereinrichtung (5) derart ausgebildet ist, dass im Normalbetrieb geprüft wird, ob die Hauptsollgröße (p*) konstant ist oder variiert, dass in dem Fall, dass die Hauptsollgröße (p*) konstant ist, der I-Block (10) des Hauptreglers (7) aktiviert wird und in dem Fall, dass die Hauptsollgröße (p*) variiert, der I-Block (10) des Hauptreglers (7) deaktiviert wird.

11. Hydraulikanordnung nach Anspruch 9 oder 10, **da**- **durch gekennzeichnet** , dass der Zusatzventileinrichtung (3) ein binär schaltendes Sperrventil (4) vor- oder nachgeordnet ist und dass die Steuereinrichtung (5) derart ausgebildet ist, dass ein Öffnen des Sperrventils (4) mit einem Übergang vom Normalbetrieb in den Sonderbetrieb und ein Schließen des Sperrventils (4) mit einem Übergang vom Sonderbetrieb in den Normalbetrieb korrespondiert.

12. Hydraulikanordnung nach Anspruch 9, 10 oder 11, **da**- **durch gekennzeichnet**, dass die Steuereinrichtung (5) derart ausgebildet ist,
- dass der I-Block (10) des Hauptreglers (7) im Sonderbetrieb als I-Block (12) des Zusatzreglers (8) verwendet wird,
- dass beim Wechsel vom Normalbetrieb in den Sonderbetrieb
-- das zuletzt ermittelte Ausgangssignal (si) des I-Blocks (10) des Hauptreglers (7) als Anfangssignal (si0) für den Normalbetrieb in einem Pufferspeicher (15) zwischengespeichert wird und
-- ein im Pufferspeicher (15) gespeichertes Anfangssignal (si0') für den Sonderbetrieb aus dem Pufferspeicher (15) ausgelesen und in den I-Block (10) des Hauptreglers (7) geladen wird und
- dass beim Wechsel vom Sonderbetrieb in den Normalbetrieb
-- das zuletzt ermittelte Ausgangssignal (si) des I-Blocks (10) des Hauptreglers (7) als Anfangssignal (si0') für den Sonderbetrieb in dem Pufferspeicher (15) zwischengespeichert wird und
-- das im Pufferspeicher (15) gespeicherte Anfangssignal (si0) für den Normalbetrieb aus dem Pufferspeicher (15) ausgelesen und in den I-Block (10) des Hauptreglers (7) geladen wird.

13. Hydraulikanordnung nach einem der Ansprüche 9 bis 12, **dadurch gekennzeichnet, dass** die Hauptventileinrichtung (2) in einem vollständig geöffneten Zustand einen Hauptnennfluss (FN) aufweist, dass die Zusatzventileinrichtung (3) in einem vollständig geöffneten Zustand einen Zusatznennfluss (FN') aufweist und dass der Zusatznennfluss (FN') erheblich größer als der Hauptnennfluss (FN) ist.

14. Hydraulikanordnung nach einem der Ansprüche 9 bis 13, **dadurch gekennzeichnet, dass** die Hauptsollgröße (p*) und die korrespondierende Hauptistgröße (p) Positionen oder Kräfte sind.

15. Hydraulikanordnung nach einem der Ansprüche 9 bis 14, **dadurch gekennzeichnet , dass** die Zusatzsollgröße (a*) und die korrespondierende Zusatzistgröße (a) Beschleunigungen sind.

16. Hydraulikanordnung nach einem der Ansprüche 9 bis 15, **dadurch gekennzeichnet , dass** der Hydraulikaktuator (1) als Hydraulikzylindereinheit ausgebildet ist.

## Claims

1. Operating method for a hydraulic arrangement,
- wherein the hydraulic arrangement comprises a hydraulic actuator (1) that can be controlled by means of a main valve device (2) and an auxiliary valve device (3),
- wherein arranged upstream of the main valve device (2) is a main regulator (7) comprising a P block (9) and an I block (10),
- wherein arranged upstream of the auxiliary valve device (3) is an auxiliary regulator (8) comprising a base block (11) and an I block (12),
- wherein the hydraulic arrangement is operated alternatively in a normal mode or in a special mode,
- wherein in the normal mode
-- the auxiliary valve device (3) is deactivated,
-- the main regulator (7) is provided with a main setpoint variable (p*) and a corresponding main actual quantity (p) of the hydraulic actuator (1) and
-- the main regulator (7) determines a main actuating variable (s) for the main valve device (2) with reference to the main setpoint variable (p*) and the main actual quantity (p) and predefines the main actuating variable (s) in the main valve device (2),
- **characterised in that** in the special mode
-- the base block (11) of the auxiliary regulator (8) is provided with an auxiliary setpoint variable (a*) and a corresponding auxiliary actual quantity (a) of the hydraulic actuator (1),
-- the base block (11) of the auxiliary regulator (8) determines an auxiliary actuating variable (s') for the auxiliary valve device (3) with reference to the auxiliary setpoint variable (a*) and the auxiliary actual quantity (a) and predefines the auxiliary actuating variable (s') in the auxiliary valve device (3),
-- the I block (12) of the auxiliary regulator (8) is provided with the main setpoint variable (p*) and the main actual quantity (p),
-- the I block (12) of the auxiliary regulator (8) determines an integral component (si') with reference to the main setpoint variable (p*) and the main actual quantity (p),
-- the integral component (si') is applied to the auxiliary actuating variable (s'),
-- the P block (9) of the main regulator (7) is provided with the main setpoint variable (p*) and the main actual quantity (p) and
-- the P block (9) of the main regulator (7) determines the main actuating variable (s) with reference to the main setpoint variable (p*) and the main actual quantity (p) and predefines in the main valve device (2).

2. Operating method according to claim 1, **characterised in that** in the normal mode a check is performed as to whether the main setpoint variable (p*) is constant or varies, when the main setpoint variable (p*) is constant, the I block (10) of the main regulator (7) is activated, and when the main setpoint variable (p*) varies, the I block (10) of the main regulator (7) is deactivated.

3. Operating method according to claim 1 or 2, **characterised in that** a binary switching non-return valve (4) is arranged upstream or downstream of the auxiliary valve device (3) and that opening of the non-return valve (4) corresponds to a transition from the normal mode into the special mode and closing of the non-return valve (4) corresponds to a transition from the special mode into the normal mode.

4. Operating method according to claim 1, 2 or 3, **characterised in that**
- in the special mode, the I block (10) of the main regulator (7) is used as the I block (12) of the auxiliary regulator (8),
- on the change from the normal mode into the special mode,
-- the most recently determined output signal (si) of the I block (10) of the main regulator (7) is stored temporarily as an initial signal (si0) for the normal mode in a buffer memory (15) and
-- an initial signal (si0') stored in the buffer memory (15) for the special mode is read out of the buffer memory (15) and loaded into the I block (10) of the main regulator (7) and
- on the change from the special mode into the normal mode
-- the most recently determined output signal (si) of the I block (10) of the main regulator (7) is stored temporarily as an initial signal (si0') for the special mode in the buffer memory (15) and
-- the initial signal (si0) stored in the buffer memory (15) for the normal mode is read out of the buffer memory (15) and loaded into the I block (10) of the main regulator (7).

5. Operating method according to one of the above claims, **characterised in that**, in a completely opened status, the main valve device (2) has a main nominal flow (FN), that, in a completely opened status, the auxiliary valve device (3) has an auxiliary nominal flow (FN') and that the auxiliary nominal flow (FN') is significantly greater than the main nominal flow (FN).

6. Operating method according to one of the above claims, **characterised in that** the main setpoint variable (p*) and the corresponding main actual quantity (p) are positions or forces.

7. Operating method according to one of the above claims, **characterised in that** the auxiliary setpoint variable (a*) and the corresponding auxiliary actual quantity (a) are accelerations.

8. Operating method according to one of the above claims, **characterised in that** the hydraulic actuator (1) is embodied as a hydraulic cylinder unit.

9. Hydraulic arrangement,
- wherein the hydraulic arrangement comprises a hydraulic actuator (1), which can be controlled by means of a main valve device (2) and an auxiliary valve device (3),
- wherein the hydraulic arrangement comprises a control unit (5),
- wherein the control unit (5) implements a main regulator (7) comprising a P block (9) and an I block (10) arranged upstream of the main valve device (2),
- wherein the control unit (5) implements an auxiliary regulator (8) comprising a base block (11) and an I block (12) arranged upstream of the auxiliary valve device (3),
- wherein the control unit (5) operates the hydraulic arrangement alternatively in a normal mode or in a special mode,
- wherein the control unit (5) is embodied such that in the normal mode
-- the auxiliary valve device (3) is deactivated,
-- the main regulator (7) is provided with a main setpoint variable (p*) and a corresponding main actual quantity (p) of the hydraulic actuator (1) and
-- the main regulator (7) determines a main actuating variable (s) for the main valve device (2) with reference to the main setpoint variable (p*) and the main actual quantity (p) and predefines the main actuating variable (s) in the main valve device (2),
- **characterised in that** the control unit is furthermore embodied such that in the special mode
-- the base block (11) of the auxiliary regulator (8) is provided with an auxiliary setpoint variable (a*) and a corresponding auxiliary actual quantity (a) of the hydraulic actuator (1),
-- the base block (11) of the auxiliary regulator (8) determines an auxiliary actuating variable (s') for the auxiliary valve device (3) with reference to the auxiliary setpoint variable (a*) and the auxiliary actual quantity (a) and predefines the auxiliary actuating variable (s') in the auxiliary valve device (3),
-- the I block (12) of the auxiliary regulator (8) is provided with the main setpoint variable (p*) and the main actual quantity (p),
-- the I block (12) of the auxiliary regulator (8) determines an integral component (si') with reference to the main setpoint variable (p*) and the main actual quantity (p),
-- the integral component (si') is applied to the auxiliary actuating variable (s'),
-- the P block (9) of the main regulator (7) is provided with the main setpoint variable (p*) and the main actual quantity (p) and
-- the P block (9) of the main regulator (7) determines the main actuating variable (s) with reference to the main setpoint variable (p*) and the main actual quantity (p) and predefines in the main valve device (2).

10. Hydraulic arrangement according to claim 9, **characterised in that** the control unit (5) is embodied such that, in the normal mode, a check is performed as to whether the main setpoint variable (p*) is constant or varies, that, in the event of the main setpoint variable (p*) being constant, the I block (10) of the main regulator (7) is activated and, in the event of the main setpoint variable (p*) varying, the I block (10) of the main regulator (7) is deactivated.

11. Hydraulic arrangement according to claim 9 or 10, **characterised in that** a binary switching non-return valve (4) is arranged upstream or downstream of the auxiliary valve device (3) and that the control unit (5) is embodied such that opening of the non-return valve (4) corresponds to a transition from the normal mode into the special mode and a closing of the non-return valve (4) corresponds to a transition from the special mode into the normal mode.

12. Hydraulic arrangement according to claim 9, 10 or 11, **characterised in that** the control unit (5) is embodied such,
- that, in the special mode, the I block (10) of the main regulator (7) is used as the I block (12) of the auxiliary regulator (8),
- that on the change from the normal mode into the special mode
-- the most recently determined output signal (si) of the I block (10) of the main regulator (7) is stored temporarily as an initial signal (si0) for the normal mode in a buffer memory (15) and
-- an initial signal (si0') stored in the buffer memory (15) for the special mode is read out of the buffer memory (15) and loaded into the I block (10) of the main regulator (7) and
- that, on the change from the special mode into the normal mode,
-- the most recently determined output signal (si) of the I block (10) of the main regulator (7) is stored temporarily as an initial signal (si0') for the special mode in the buffer memory (15) and
-- the initial signal (si0) stored in the buffer memory (15) for the normal mode is read out of the buffer memory (15) and loaded into the I block (10) of the main regulator (7).

13. Hydraulic arrangement according to one of claims 9 to 12, **characterised in that**, in a completely opened status, the main valve device (2) has a main nominal flow (FN), that, in a completely opened status, the auxiliary valve device (3) has an auxiliary nominal flow (FN') and that the auxiliary nominal flow (FN') is significantly greater than the main nominal flow (FN).

14. Hydraulic arrangement according to one of claims 9 to 13, **characterised in that** the main setpoint variable (p*) and the corresponding main actual quantity (p) are positions or forces.

15. Hydraulic arrangement according to one of claims 9 to 14, **characterised in that** the auxiliary setpoint variable (a*) and the corresponding auxiliary actual quantity (a) are accelerations.

16. Hydraulic arrangement according to one of claims 9 to 15, **characterised in that** the hydraulic actuator (1) is embodied as a hydraulic cylinder unit.

## Revendications

1. Procédé de fonctionnement pour un agencement hydraulique,
- dans lequel l'agencement hydraulique comporte un actionneur hydraulique (1) qui peut être commandé par un dispositif de soupape principal (2) et un dispositif de soupape auxiliaire (3),
- dans lequel est disposé en amont du dispositif de soupape principal (2) un régulateur principal (7) qui comporte un bloc P (9) et un bloc I (10),
- dans lequel est disposé en amont du dispositif de soupape auxiliaire (3) un régulateur auxiliaire (8) qui comporte un bloc de base (11) et un bloc I (12),
- dans lequel l'agencement hydraulique est mis en fonctionnement en variante dans un fonctionnement normal ou dans un fonctionnement spécial,
- dans lequel en fonctionnement normal
- le dispositif de soupape auxiliaire (3) est désactivé,
- une grandeur théorique principale (p*) et une grandeur réelle principale (p) correspondante de l'actionneur hydraulique (1) sont introduites dans le régulateur principal (7) et
- le régulateur principal (7) détermine à l'aide de la grandeur théorique principale (p*) et de la grandeur réelle principale (p) une grandeur de réglage principale (s) pour le dispositif de soupape principal (2) et affecte la grandeur de réglage principale (s) au dispositif de soupape principal (2),
- **caractérisé en ce que**, en fonctionnement spécial,
- une grandeur théorique auxiliaire (a*) et une grandeur réelle auxiliaire (a) correspondante de l'actionneur hydraulique (1) sont introduites dans le bloc de base (11) du régulateur auxiliaire (8),
- le bloc de base (11) du régulateur auxiliaire (8) détermine à l'aide de la grandeur théorique auxiliaire (a*) et de la grandeur réelle auxiliaire (a) une grandeur de réglage auxiliaire (s') pour le dispositif de soupape auxiliaire (3) et affecte la grandeur de réglage auxiliaire (s') au dispositif de soupape auxiliaire (3),
- la grandeur théorique principale (p*) et la grandeur réelle principale (p) sont introduites dans le bloc I (12) du régulateur auxiliaire (8),
- le bloc I (12) du régulateur auxiliaire (8) détermine à l'aide de la grandeur théorique principale (p*) et de la grandeur réelle principale (p) une composante intégrale (si'),
- la composante intégrale (si') est appliquée à la grandeur de réglage auxiliaire (s'),
- la grandeur théorique principale (p*) et la grandeur réelle principale (p) sont introduites dans le bloc P (9) du régulateur principal (7) et
- le bloc P (9) du régulateur principal (7) détermine à l'aide de la grandeur théorique principale (p*) et de la grandeur réelle principale (p) la grandeur de réglage principale (s) et l'affecte au dispositif de soupape principal (2).

2. Procédé de fonctionnement selon la revendication 1, **caractérisé en ce qu'**il est examiné, en fonctionnement normal, si la grandeur théorique principale (p*) est constante ou varie, **en ce que**, dans le cas où la grandeur théorique principale (p*) est constante, le bloc I (10) du régulateur principal (7) est activé, et dans le cas où la grandeur théorique principale (p*) varie, le bloc I (10) du régulateur principal (7) est désactivé.

3. Procédé de fonctionnement selon la revendication 1 ou la revendication 2, **caractérisé en ce qu'**une soupape d'arrêt à commutation binaire (4) est disposée en amont ou en aval du dispositif de soupape auxiliaire (3) et **en ce qu'**une ouverture de la soupape d'arrêt (4) correspond à une transition du fonctionnement normal au fonctionnement spécial et qu'une fermeture de la soupape d'arrêt (4) correspond à une transition du fonctionnement spécial au fonctionnement normal.

4. Procédé de fonctionnement selon la revendication 1, la revendication 2 ou la revendication 3, **caractérisé en ce que**
- le bloc I (10) du régulateur principal (7) est utilisé en fonctionnement spécial en tant que bloc I (12) du régulateur auxiliaire (8),
- lors du changement du fonctionnement normal au fonctionnement spécial
- le signal de sortie déterminé en dernier (si) du bloc I (10) du régulateur principal (7) est stocké de manière intermédiaire dans une mémoire tampon (15) en tant que signal initial (si0) pour le fonctionnement normal et
- un signal initial (si0') stocké dans la mémoire tampon (15) pour le fonctionnement spécial est extrait de la mémoire tampon (15) et est chargé dans le bloc I (10) du régulateur principal (7) et
- lors du changement du fonctionnement spécial au fonctionnement normal
- le signal de sortie déterminé en dernier (si) du bloc I (10) du régulateur principal (7) est stocké de manière intermédiaire dans la mémoire tampon (15) en tant que signal initial (si0') pour le fonctionnement spécial et
- le signal initial (si0) stocké dans la mémoire tampon (15) pour le fonctionnement normal est extrait de la mémoire tampon (15) et est chargé dans le bloc I (10) du régulateur principal (7).

5. Procédé de fonctionnement selon l'une des revendications ci-dessus, **caractérisé en ce que** le dispositif de soupape principal (2) possède dans un état entièrement ouvert un écoulement nominal principal (FN), **en ce que** le dispositif de soupape auxiliaire (3) possède dans un état entièrement ouvert un écoulement nominal auxiliaire (FN') et **en ce que** l'écoulement nominal auxiliaire (FN') est considérablement supérieur à l'écoulement nominal principal (FN).

6. Procédé de fonctionnement selon l'une des revendications ci-dessus, **caractérisé en ce que** la grandeur théorique principale (p*) et la grandeur réelle principale (p) correspondante sont des positions ou des forces.

7. Procédé de fonctionnement selon l'une des revendications ci-dessus, **caractérisé en ce que** la grandeur théorique auxiliaire (a*) et la grandeur réelle auxiliaire (a) correspondante sont des accélérations.

8. Procédé de fonctionnement selon l'une des revendications ci-dessus, **caractérisé en ce que** l'actionneur hydraulique (1) est conçu sous la forme d'une unité à vérin hydraulique.

9. Agencement hydraulique,
- l'agencement hydraulique comportant un actionneur hydraulique (1) qui peut être commandé par un dispositif de soupape principal (2) et un dispositif de soupape auxiliaire (3),
- l'agencement hydraulique comprenant un dispositif de commande (5),
- dans lequel le dispositif de commande (5) implémente un régulateur principal (7) disposé en amont du dispositif de soupape principal (2), lequel régulateur principal comporte un bloc P (9) et un bloc I (10),
- dans lequel le dispositif de commande (5) implémente un régulateur auxiliaire (8) disposé en amont du dispositif de soupape auxiliaire (3), lequel régulateur auxiliaire comporte un bloc de base (11) et un bloc I (12),
- dans lequel le dispositif de commande (5) fait fonctionner l'agencement hydraulique en variante dans un fonctionnement normal ou dans un fonctionnement spécial,
- dans lequel le dispositif de commande (5) est conçu de telle sorte que, en fonctionnement normal,
- le dispositif de soupape auxiliaire (3) soit désactivé,
- une grandeur théorique principale (p*) et une grandeur réelle principale (p) correspondante de l'actionneur hydraulique (1) soient introduites dans le régulateur principal (7) et
- le régulateur principal (7) détermine à l'aide de la grandeur théorique principale (p*) et de la grandeur réelle principale (p) une grandeur de réglage principale (s) pour le dispositif de soupape principal (2) et affecte la grandeur de réglage principale (s) au dispositif de soupape principal (2),
- **caractérisé en ce que** le dispositif de commande est en outre conçu de telle sorte que, en fonctionnement spécial,
- une grandeur théorique auxiliaire (a*) et une grandeur réelle auxiliaire (a) correspondante de l'actionneur hydraulique (1) soient introduites dans le bloc de base (11) du régulateur auxiliaire (8),
- le bloc de base (11) du régulateur auxiliaire (8) détermine à l'aide de la grandeur théorique auxiliaire (a*) et de la grandeur réelle auxiliaire (a) une grandeur de réglage auxiliaire (s') pour le dispositif de soupape auxiliaire (3) et affecte la grandeur de réglage auxiliaire (s') au dispositif de soupape auxiliaire (3),
- la grandeur théorique principale (p*) et la grandeur réelle principale (p) soient introduites dans le bloc I (12) du régulateur auxiliaire (8),
- le bloc I (12) du régulateur auxiliaire (8) détermine à l'aide de la grandeur théorique principale (p*) et de la grandeur réelle principale (p) une composante intégrale (si'),
- la composante intégrale (si') soit appliquée à la grandeur de réglage auxiliaire (s'),
- la grandeur théorique principale (p*) et la grandeur réelle principale (p) soient introduites dans le bloc P (9) du régulateur principal (7) et
- le bloc P (9) du régulateur principal (7) détermine à l'aide de la grandeur théorique principale (p*) et de la grandeur réelle principale (p) la grandeur de réglage principale (s) et l'affecte au dispositif de soupape principal (2).

10. Agencement hydraulique selon la revendication 9, **caractérisé en ce que** le dispositif de commande (5) est conçu de telle sorte qu'il soit examiné, en fonctionnement normal, si la grandeur théorique principale (p*) est constante ou varie, que, dans le cas où la grandeur théorique principale (p*) est constante, le bloc I (10) du régulateur principal (7) soit activé, et que, dans le cas où la grandeur théorique principale (p*) varie, le bloc I (10) du régulateur principal (7) soit désactivé.

11. Agencement hydraulique selon la revendication 9 ou la revendication 10, **caractérisé en ce qu'**une soupape d'arrêt à commutation binaire (4) est disposée en amont ou en aval du dispositif de soupape auxiliaire (3) et **en ce que** le dispositif de commande (5) est conçu de telle sorte qu'une ouverture de la soupape d'arrêt (4) corresponde à une transition du fonctionnement normal au fonctionnement spécial et qu'une fermeture de la soupape d'arrêt (4) corresponde à une transition du fonctionnement spécial au fonctionnement normal.

12. Agencement hydraulique selon la revendication 9, la revendication 10 ou la revendication 11, **caractérisé en ce que** le dispositif de commande (5) est conçu de telle sorte que
- le bloc I (10) du régulateur principal (7) soit utilisé en fonctionnement spécial en tant que bloc I (12) du régulateur auxiliaire (8),
- lors du changement du fonctionnement normal au fonctionnement spécial
- le signal de sortie déterminé en dernier (si) du bloc I (10) du régulateur principal (7) soit stocké de manière intermédiaire dans une mémoire tampon (15) en tant que signal initial (si0) pour le fonctionnement normal et
- un signal initial (si0') stocké dans la mémoire tampon (15) pour le fonctionnement spécial soit extrait de la mémoire tampon (15) et soit chargé dans le bloc I (10) du régulateur principal (7) et
- lors du changement du fonctionnement spécial au fonctionnement normal
- le signal de sortie déterminé en dernier (si) du bloc I (10) du régulateur principal (7) soit stocké de manière intermédiaire dans la mémoire tampon (15) en tant que signal initial (spi0') pour le fonctionnement spécial et
- le signal initial (si0) stocké dans la mémoire tampon (15) pour le fonctionnement normal soit extrait de la mémoire tampon (15) et soit chargé dans le bloc I (10) du régulateur principal (7).

13. Agencement hydraulique selon l'une des revendications 9 à 12, **caractérisé en ce que** le dispositif de soupape principal (2) possède dans un état entièrement ouvert un écoulement nominal principal (FN), **en ce que** le dispositif de soupape auxiliaire (3) possède dans un état entièrement ouvert un écoulement nominal auxiliaire (FN') et **en ce que** l'écoulement nominal auxiliaire (FN') est considérablement supérieur à l'écoulement nominal principal (FN).

14. Agencement hydraulique selon l'une des revendications 9 à 13, **caractérisé en ce que** la grandeur théorique principale (p*) et la grandeur réelle principale (p) correspondante sont des positions ou des forces.

15. Agencement hydraulique selon l'une des revendications 9 à 14, **caractérisé en ce que** la grandeur théorique auxiliaire (a*) et la grandeur réelle auxiliaire (a) correspondante sont des accélérations.

16. Agencement hydraulique selon l'une des revendications 9 à 15, **caractérisé en ce que** l'actionneur hydraulique (1) est conçu sous la forme d'une unité à vérin hydraulique.
